# EUROPÄISCHE PATENTSCHRIFT

(11) **EP 1 380 588 B1**
(45) Veröffentlichungstag und Bekanntmachung des Hinweises auf die Patenterteilung: **21.01.2004**
(21) Anmeldenummer: 02021506.7
(22) Anmeldetag: 26.09.2002
(51) Int. Cl.: C07F 7/08

(54) **Neue Siloxanverbindungen und deren Verwendung als Homogenisierungsmittel in Trennmitteln mit Mattierungseffekt zur Herstellung von Formkörpern aus Kunststoffen mit mattierten Oberflächen**
New siloxane compounds and their use as homogenizers in release agents causing mat finish for the preparation of resin molded articles having mat finishes
Nouveaux composés siloxanes et leur utilisation comme homogénéisants dans des agents de démoulages avec effet matifiant pour la préparation d' articles moulés en résine synthétique ayants une finition mat

(43) Veröffentlichungstag der Anmeldung: 14.01.2004
(73) Patentinhaber: Goldschmidt AG, 45127 Essen (DE)
(72) Erfinder: Dudzik, Horst, 45326 Essen (DE); Knott, Wilfried, Dr., 45141 Essen (DE); Lammerting, Helmut, 48456 Herbede (DE)

(56) Entgegenhaltungen:
- EP-A- 0 514 737
- EP-A- 0 665 256
- DE-A- 4 128 932

## Beschreibung

Die Erfindung betrifft neue Siloxanverbindungen und deren Verwendung als Homogenisierungsmittel in Trennmitteln mit Mattierungseffekt für Formen zur Herstellung von Formkörpern aus Kunststoffen, insbesondere Polyurethanen.

Bei der Herstellung von Formkörpern aus Kunststoffen, insbesondere Polyurethanen, ist es üblich, um ein Entformen zu erleichtern, die Formen vor dem Einbringen des Kunststoffes mit einem Trennmittel zu versehen. Die Trennmittel sollen in geringen Mengen wirksam sein, die eine einwandfreie Entformung des Formkörpers gewährleisten, jedoch nach der Entformung eine weitere Ver- und Bearbeitung, wie etwa eine Lackierung oder Verklebung, nicht negativ beeinflussen.

Gerade bei Formkörpern, die eine sehr hochwertige Oberfläche aufweisen müssen, z.B. Schuhsohlen und Absätze oder Kunststoffformkörper im Fahrzeugbau, ist es notwendig, diese in den Formen entstehender Formkörper auch aus den Werkzeugen optimal herauslösen zu können, ohne die Oberflächen zu beschädigen oder in ihrer Güte zu beeinträchtigen.

Als trennaktive Substanzen werden entsprechend dem Stand der Technik überwiegend Silicone aber auch Wachse, Paraffine, Ester und Salze von Fettsäuren und Fluorkohlenwasserstoffe verwendet.

Zur Erzielung eines gleichmäßigen, dünnen Films auf der Formwandung ist es von Vorteil, möglichst niedrigviskose Trennmittelzubereitungen mit hohem Benetzungsvermögen zu verwenden. Dies erfordert in der Regel die Verwendung lösungsmittelhaltiger Zubereitungen, wobei die Lösungsmittel von der meist erwärmten Oberfläche der Formwandung abdunsten und einen dünnen Trennmittelfilm hinterlassen sollen.

Die Trennwirkung dieser Formulierungen, die überwiegend Silicone enthalten, genügt in der Regel den Erfordernissen der Praxis. Es werden aber Formkörper mit unzureichender Oberflächengüte und oft zu glänzenden Oberflächen erhalten.

Anstelle glänzender Oberflächen werden aus anwendungstechnischen und insbesondere modischen Aspekten jedoch zunehmend auch matte Oberflächen verlangt.

In der EP-A-0665256 wird auf Seite 2, Zeile 33-34 erwähnt, daß 2-Phenylpropylmethylsiloxaneinheiten enthaltende Copolymere für Trennmittel geeignet sind. EP-A-0665256 beschreibt ferner niedermolekulare Verbindungen der Formel (I) bei denen R= 2-Phenylpropyl, a=2,9 und b=3,7 (Beispiel 6) oder a = 4,5 und b= 4 (Beispiel 7). Aussagen über Mattierungseigenschaften solcher Verbindungen sind aus EP-A-0665256 nicht zu entnehmen.

Eine Reduzierung des Glanzgrades, d.h. matte Oberflächen bis hin zu einem stumpfen Erscheinungsbild, wird durch eine Strukturierung der Formkörperoberflächen erhalten. Dazu müssen zusätzlich Mattierungsmittel in die Trennmittel eingebracht werden.

Als Mattierungsmittel werden üblicherweise Teilchen mit einer Teilchengröße von zwischen 1 und 15 Mikrometer, nicht jedoch über 50 Mikrometer und einer vergleichsweise engen Teilchengrößenverteilung verwendet, da größere Teilchen zu Unregelmäßigkeiten in der Oberfläche führen.

Beispiele für die im Stand der Technik verwendeten Mattierungsmittel sind poröse Schichtsilikate (Syloid®-Typen der Firma Grace), die mittlere Teilchengrössen von vorzugsweise zwischen 1 und 10 Mikrometern aufweisen; Kunststoffteilchen, wie Polyamid-Teilchen (Orgasol®-Typen der Firma Atochem), die Teilchengrössen zwischen 1 und 10 Mikrometern aufweisen, vorzugsweise werden aber Wachse wie Paraffinwachse, insbesondere Polyethylenwachse mit Molekularmassen von ca. 800 bis 1.200 Dalton und Schmelzpunkten von ca. 90 bis 100°C und auch andere Wachsrohstoffe verwendet.

Diese werden gewöhnlich in Isoparaffinen/aliphatischen Kohlenwasserstoffen dispergiert, so dass sie feinteilig vorliegen und der oben angeführten Trennmittelzubereitung zugemischt werden können.

Diese Formulierungen bilden nach dem Aufsprühen auf die Formwandung mit üblichen Sprühgeräten, meist unter Verwendung eines Trägergases wie Luft oder Inertgas, keinen homogenen Film aus sondern weisen eine ungleichmäßige Verteilung auf, so dass als direkte Folge daraus anstelle gleichmäßiger Mattierungen Inhomogenitäten und Mattierungsgradabweichungen auf den Oberflächen der Formkörper erzeugt werden.

Als weiterer negativer Effekt dieser ungleichen Verteilung wurde eine Minderung der Trennwirkung beobachtet.

Eine Aufgabe der vorliegenden Erfindung war es daher, Mattierungsmittel zu finden, welche die Trennwirkung der Trenmittelformulierungen nicht herabsetzen und auf den Oberflächen der Kunststoff- insbesondere Polyurethanformkörper eine gleichmäßig matte Oberfläche erzeugen.

Diese Aufgabe wird gelöst durch neue oligomere, langkettige Kohlenwasserstoffreste enthaltende Siloxanverbindungen, welche den Silicon/Wachs-Dispersionen zugesetzt werden.

Ein Gegenstand der Erfindung sind daher Siloxanverbindungen der allgemeinen Formel (I) 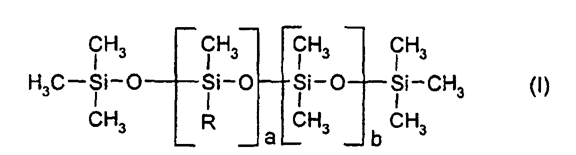 worin
- R: einen gegebenenfalls verzweigten Kohlenwasserstoffrest mit 16 bis 50 Kohlenstoffatomen;
- a: einen Wert zwischen 0,8 bis 1,5, vorzugsweise 1,0 bis 1,3;
- b: einen Wert von 3 bis a bedeuten.

Ein weiterer Gegenstand der Erfindung ist die Verwendung der Siloxanverbindungen der allgemeinen Formel (I) 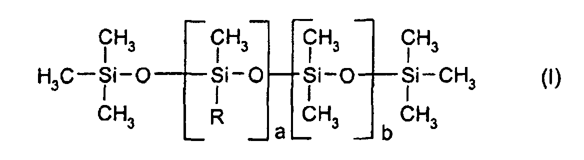 worin
- R, a, b,: die vorgenannte Bedeutung haben,
als Homogenisierungsmittel in Trennmitteln mit Mattierungseffekt für Formen zur Herstellung von Formkörpern aus Kunststoffen, insbesondere Polyurethanen.

Die erfindungsgemäßen Verbindungen der allgemeinen Formel (I) sind herstellbar durch Umsetzung von Wasserstoffsiloxanen der allgemeinen Formel (Ia) 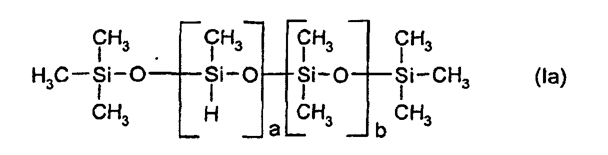 worin
- a und b: die vorgenannte Bedeutung haben, mit α-Olefinen der allgemeinen Formel (Ib): H₂C=CH-R^{a}
worin
R^{a} ein gegebenenfalls verzweigter Kohlenwasserstoffrest mit 16 bis 50 Kohlenstoffatomen bedeutet, nach den allgemein bekannten Hydrosilisierungsverfahren.

Erfindungsgemäß bevorzugt sind die handelsüblichen Mischungen dieser α-Olefine mit Schmelzpunkten im Bereich von ca. 50 bis 80 °C, vorzugsweise ca. 70 bis 80 °C.

Zur Herstellung der erfindungsgemäßen Trennmittel mit Mattierungseffekt können als Basis die bekannten Trennmittelformulierungen, welche Siliconöle und als Mattierungsmittel Wachse, Silicate oder Aerosile enthalten, mitverwendet werden.

Ein Beispiel sind die bekannten hochwirksamen siliconbasierten Formulierungen wie die aus der DE-A 38 21 908 bekannten Trennmittel welche 60 bis 70 Gew.-% Teile Polydimethyl-Tetracyclosiloxan (Octamethylcylotetrasiloxan), 20 bis 30 Gew.-% Teile Polydimethyl-Pentacyclosiloxan (Decamethylcyclopentasiloxan) und 5 bis 10 Gew.-% Teile Siliconharze sowie 5 bis 10 Gew.-% Teile Siliconöl enthalten.

Ein weiteres Beispiel sind die aus der DE-C 42 38 290 bekannten Formulierungen, bestehend aus 0,1 bis 5 Gew.-% eines γ-Aminopropylgruppen enthaltenden Polysiloxans, wobei die γ-Aminopropylgruppen am Stickstoffatom substituiert sein können, 4,0 bis 60 Gew.-% eines Polysiloxans der Formel (II) 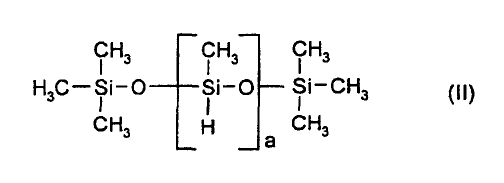 wobei
- a: eine Zahl von 2 bis 6 ist und das Polysiloxan frei von Verbindungen ist, bei denen a < 2 ist und höchstens 2 Gew.-% an Verbindungen enthält, bei denen a > 6 ist und 35,0 bis 95,9 Gew.-% eines flüchtigen Lösungsmittels oder Lösungsmittelgemisches besteht.

Diesen Trennmitteln mit Mattierungseffekt werden als Homogenisierungsmittel die erfindungsgemäßen Verbindungen der allgemeinen Formel (I) in Mengen von 0,5 bis 5 Gew.-%, vorzugsweise 1,5 bis 4 Gew.-%, bezogen auf die Gesamtformulierung, zugesetzt.

Bei der Verwendung der erfindungsgemäßen Formulierung wird diese zunächst auf die Formwandung mit üblichen Sprühgeräten, meist unter Verwendung eines Trägergases, wie Luft oder Inertgas, aufgesprüht. Die Formen sind in der Regel von der vorhergegangenen Nutzung noch warm, so dass das Lösungsmittel rasch abdunstet. Auf der Wandung der Form befindet sich nun das Trennmittel und das Mattierungsmittel in dünner homogener Schicht. Die Form wird nun geschlossen. Der Thermoplast oder der reaktiv härtende Kunststoff wird in die Form gefüllt. Der Formling wird nach Verfestigung und/oder Abkühlung der Form entnommen.

### Anwendungstechnische Versuche:

### Beispiele zur Herstellung der erfindungsgemäßen Substanzen

### Beispiel 1:

In einem 250-ml-Vierhalskolben, ausgerüstet mit KPG-Rührer, Tropftrichter, Intensivkühler und Stickstoffüberleitung werden 170,7 g eines C₃₀₊-α-Olefingemisches (Olefin mit einer Kettenlänge von mehr als 30-Atomen) mit einer mittleren Molmasse von 529 g/mol zusammen mit 170 g eines Isoparaffins (Cobersol B 56) unter Rühren auf 90 °C erhitzt und mit 10 ppm Pt in Form von Bis-(µ-chloro)-cyclohexen-platin(II)chlorid als Katalysator versetzt. Über den Tropftrichter werden 60 g eines seitständigen Wasserstoffsiloxans der Struktur MD_{1,8}D_{1,2}^{H}M (SiH-Gehalt: 3,26 Val/kg) innerhalb von 20 Minuten hinzudosiert. Die langsam verlaufende SiC-Verknüpfungsreaktion benötigt ingesamt 6,5 Stunden, wobei 3 Stunden nach Zutropfbeginn eine Nachkatalyse (10 ppm Pt in Form von Bis-(µ-chloro)cyclohexenplatin(II)chlorid) erforderlich ist. Bei Reaktionsende indiziert die gasvolumetrische SiH-Bestimmung (Zersetzung einer eingewogenen Probe mit Natriumbutylat unter Wasserstofffreisetzung) einen SiH-Umsatz von 98,6 %.

Nach Abkühlen des Reaktionsansatzes wird das Alkylsiloxan als ein nahezu farbloses Wachs isoliert.

### Beispiel 2:

In Analogie zu Beispiel 1 werden 141,4 g eines C₃₀₊-α-Olefingemisches (Olefin mit einer Kettenlänge von mehr als 30-Atomen) mit einer Molmasse von 529 g/mol zusammen mit 141 g eines Isoparaffins (Cobersol B 56) unter Rühren auf 90 °C erhitzt und mit 10 ppm Pt in Form von Bis-(µ-chloro)-cyclohexenplatin(II)chlorid als Katalysator versetzt. 60 g eines seitständigen Wasserstoffsiloxans der Struktur MD₂D^{H}M (SiH-Gehalt: 2,70 Val/kg) werden innerhalb von 20 Minuten zugetropft. Bei dieser recht langsamen Reaktion wird im Verlauf von 7 Stunden und unter Zugabe weiteren Platinkatalysators (10 ppm) ein gasvolumetrisch ermittelter SiH-Umsatz von 96 % erreicht.

Das erhaltene Alkylsiloxan ist farblos und von wachsartiger Konsistenz.

### Beispiel 3:

In einer Apparatur wie in Beispiel 1 beschrieben, wird eine Lösung bestehend aus 185, 9 g eines C₃₀₊-α-Olefingemisches (Olefin mit einer Kettenlänge von mehr als 30-Atomen) mit einer Molmasse von 529 g/mol zusammen mit 186 g eines Isoparaffins (Cobersol B 56) unter Rühren auf 90 °C erhitzt und mit 10 ppm Pt in Form von Bis-(µ-chloro)-cyclohexen-platin(II)chlorid als Katalysator versetzt. 60 g eines seitständigen Wasserstoffsiloxans (Strukturtyp: MD1, 7DH1, 3M, SiH-Gehalt: 3,55 Val/kg) werden im Verlauf von 20 Minuten zugetropft. Unter Nachkatalyse (nach 3 Stunden erneuter Zusatz von 10 ppm Pt-Katalysator) erreicht der Ansatz nach insgesamt 6,5 Stunden einen gasvolumetrisch ermittelten SiH-Umsatz von > 98 %.

Erhalten wird ein farbloses Wachs.

### Beispiel 4:

In einem 250-ml-Vierhalskolben, ausgerüstet mit KPG-Rührer, Tropftrichter, Intensivkühler und Stickstoffüberleitung werden 129,1 g eines α-Olefinschnitts mit 24 bis 28 C-Atomen mit einer mittleren Molmasse von 400 g/mol zusammen mit 129 g eines Isoparaffins (Cobersol B 56) unter Rühren auf 90°C erhitzt und mit 10 ppm Pt in Form von Bis-(µ-chloro)-cyclohexen-platin(II)chlorid als Katalysator versetzt. 60 g des in Beispiel 1 verwendeten seitständigen Wasserstoffsiloxans (SiH-Gehalt: 3,26 Val/kg, Strukturtyp: MD1, 8DH1, 2M) werden im Verlauf von 20 Min. hinzugetropft. Nach ca. 6,5 Stunden und unter zwischenzeitlicher Nachkatalyse ist die SiC-Verknüpfungsreaktion gemäß gasvolumetrischer SiH-Bestimmung zu 98 % abgeschlossen.

Ein farbloses Siliconwachs wird erhalten.

Anwendungstechnische Beispiele zur Überprüfung der erfindungsgemäßen Substanzen:

Zur Überprüfung dieser erfindungsgemäßen Substanzen gemäß Beispiel 1 bis 4 wurden lösungsmittelhaltige Trennmitteldispersionen hergestellt, die folgende Bestandteile enthalten:
a) erfindungsgemäße Substanz jeweils gemäß Beispiel 1 bis 4
b) Dimethylpolysiloxan, Viskosität 100 mPas
c) Paraffinwachs, Erstarrungspunkt 91°C
d) aliphatischer Kohlenwasserstoff, Siedebereich 170 bis 190°C
e) Decamethylcyclopentasiloxan

Zur Überprüfung der Trennmitteldispersionen wird ein Polyurethanschaum der Dichte 0,9 kg/dm² hergestellt. Dazu wird eine Testform aus Aluminium verwendet, die mit einem separaten Deckel mit Schraubzwingen geschlossen werden kann. Die Form wird auf eine Temperatur von 50 °C vorgewärmt. Die zu prüfende Trennmittelzubereitung wird mit einer luftzerstäubenden Pistole auf die Innenfläche der Testform und des Deckels gesprüht, so dass ein zusammenhängender Film entsteht.

Das Polyol-Isocyanat-Gemisch wird wie folgt hergestellt:

171 g einer verschäumungsfähigen Polyester-Polyol-Komponente werden mit 192 g einer Isocyanatkomponente, bestehend aus 4,4-Diisocyanattodiphenylmethan, durch intensives Rühren mit einem Laborrührer mit 2.500 U/Min. 7 Sek. lang vermischt. Das noch flüssig vorliegende Reaktionsgemisch wird in die bereits vorbereitete Aluminiumform gegossen, der Deckel aufgelegt und mit Schraubzwingen verschlossen. Nach einer Standzeit von 4 Min. wird der Deckel entfernt. Es werden hier die notwendigen Zugkräfte mit der Federwaage gemessen und darüber hinaus das Aussehen der Teile hinsichtlich Mattierungseffekt und Gleichmäßigkeit der Oberflächen beurteilt. Es werden mit jeder Trennmittelzubereitung 10 aufeinander folgende Entformungen durchgeführt und aus den ermittelten Trennkräften ein statistischer Mittelwert gebildet.

In der nachgestellten Tabelle 1 werden zunächst die Trennmitteldispersionen und in Tabelle 2 die Überprüfung dieser Dispersionen dargestellt (1 bis 6 erfindungsgemäß, 7 bis 9 nicht erfindungsgemäß).

**Tabelle 1:**

| Trennmittelzubereitungen(Mengenangabe in Gew.-%) | | | | | | | | |
|---|---|---|---|---|---|---|---|---|
| Beispiel | KW | DmPS | PW | Siliconöl | | Erfindungsgemäßes Copolymer | | |
| | | | | | Teile | a | b | R |
| 1 | 48 | 45 | 2,5 | 2,5 | 2,0 | 1,2 | 1,8 | 30 |
| 2 | 48 | 45 | 2,5 | 2,5 | 2,0 | 1,2 | 1,8 | 24-28 |
| 3 | 48 | 45 | 2,5 | 2,5 | 2,0 | 1,0 | 2,0 | 30 |
| 4 | 48 | 45 | 2,5 | 2,5 | 2,0 | 1,3 | 1,7 | 30 |
| 5 | 48 | 45 | 1,5 | 3,5 | 2,0 | 1,2 | 1,8 | 30 |
| 6 | 48 | 45 | 3,5 | 1,5 | 2,0 | 1,2 | 1,8 | 30 |
| 7 | 48 | 45 | 2,5 | 2,5 | - | - | - | - |
| 8 | 48 | 45 | 1,5 | 3,5 | - | - | - | - |
| 9 | 48 | 45 | 3,5 | 1,5 | - | - | - | - |
| KW = aliphatischer Kohlenwasserstoff | | | | | | | | |
| DmPS = Decamethylcyclopentasiloxan | | | | | | | | |
| PW = Paraffinwachs | | | | | | | | |

Beurteilung der Trennwirkung gemäß Tabelle 2:

| | |
|---|---|
| 1 bis 2 N/dm2 | sehr gut |
| 3 bis 4 N/dm2 | gut |
| 5 bis 6 N/dm2 | mäßig |
| 7 bis 8 N/dm2 | ausreichend |
| > 8 N/dm2 | nicht ausreichend |

Die Beispiele gemäß Trennmittelzubereitung 1 bis 6 sind erfindungsgemäß, die Beispiele 7 bis 9 nicht erfindungsgemäß

**Tabelle 2:**

| Überprüfung der Trennmittelzubereitungen: | | |
|---|---|---|
| Beispiel | Optische Beurteilung der Oberflächen | Beurteilung der Trennwirkung |
| 1 | matt, gleichmäßig | sehr gut |
| 2 | matt, gleichmäßig | sehr gut |
| 3 | matt, gleichmäßig | sehr gut |
| 4 | matt, gleichmäßig | gut |
| 5 | seidenmatt, gleichmäßig | sehr gut |
| 6 | sehr matt, gleichmäßig | gut |
| 7 | matt mit Glanzstellen, ungleichmäßig | mäßig |
| 8 | matt mit Glanzstellen, ungleichmäßig | gut |
| 9 | matt mit Glanzstellen, ungleichmäßig | mäßig |

Es zeigt sich, dass die Formteile, die mit den erfindungsgemäßen Zubereitungen entformt wurden, sehr matte Oberflächen aufwiesen, die eine gleichmäßige und einwandfreie Optik zeigten. Die Formulierungen vom Stand der Technik gemäß 7 bis 9 zeigten eine ungleichmäßige Optik, waren teils glänzend und teils matt und somit nicht akzeptabel. Somit wurde nachweislich unter Mitverwerwendung der erfindungsgemäßen Verbindungen die gewünschte Oberflächenqualität von Formteilen erheblich verbessert, da es nun möglich ist, Formteile ohne zusätzliche Nachbehandlung herzustellen.

Hiermit wurde gleichzeitig belegt, dass die erfindungsgemäßen Substanzen eine dispergierende Wirkung in Formulierungen aufweisen, die Wachs- und Siliconrohstoffe enthalten.

## Patentansprüche

1. Siloxanverbindungen der allgemeinen Formel (I) 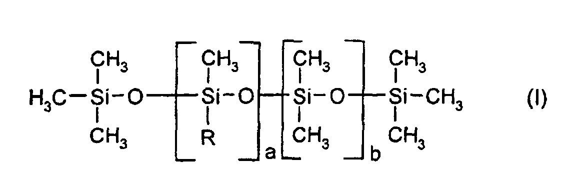 worin
R einen gegebenenfalls verzweigten Kohlenwasserstoffrest mit 16 bis 50 Kohlenstoffatomen;
a einen Wert zwischen 0,8 bis 1,5;
b einen Wert von 3 bis a bedeuten.

2. Siloxanverbindungen gemäß Anspruch 1, **dadurch gekennzeichnet, dass** a einen Wert von 1,0 bis 1,3 hat.

3. Siloxanverbindungen gemäß den Ansprüchen 1 oder 2, **dadurch gekennzeichnet, dass** R ein Kohlenwasserstoffrest mit einer mittleren Anzahl von 30 C-Atomen ist.

4. Verwendung der Siloxanverbindungen der allgemeinen Formel (I) 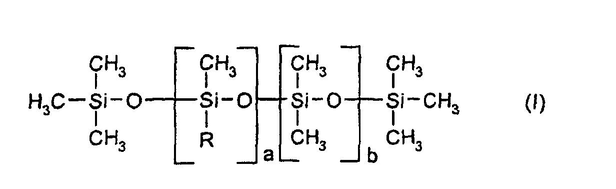 worin
R einen gegebenenfalls verzweigten Kohlenwasserstoffrest mit 16 bis 50 Kohlenstoffatomen;
a einen Wert zwischen 0,8 bis 1,5;
b einen Wert von 3 bis a bedeuten,
als Homogenisierungsmittel in Trennmitteln mit Mattierungseffekt für Formen zur Herstellung von Formkörpern aus Kunststoffen, insbesondere Polyurethanen.

5. Trennmittel mit Mattierungseffekt für Formen zur Herstellung von Formkörpern aus Kunststoffen, insbesondere Polyurethanen, **dadurch gekennzeichnet, dass** sie als Homogenisierungsmittel Verbindungen der allgemeinen Formel (I) enthalten.

## Claims

1. Siloxane compounds of the general formula (I) 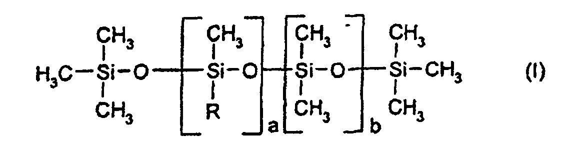 where
R is an unbranched or branched hydrocarbon radical having from 16 to 50 carbon atoms;
a is a value from 0.8 to 1.5;
b is a value from 3 to a.

2. Siloxane compounds according to Claim 1, **characterized in that** a has a value of from 1.0 to 1.3.

3. Siloxane compounds according to Claims 1 or 2, **characterized in that** R is a hydrocarbon radical having an average number of 30 carbon atoms.

4. Use of the siloxane compounds of the general formula (I) 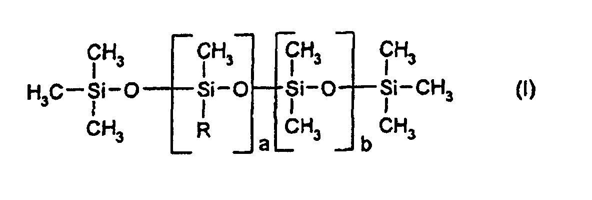 where
R is an unbranched or branched hydrocarbon radical having from 16 to 50 carbon atoms;
a is a value from 0.8 to 1.5;
b is a value from 3 to a,
as homogenizer in release agents with matting effect for moulds to produce mouldings from plastics, in particular from polyurethanes.

5. Release agents with matting effect for moulds to produce mouldings from plastics, in particular from polyurethanes, **characterized in that** they comprise, as homogenizer, compounds of the general formula (I).

## Revendications

1. Composés siloxane de formule générale (I) 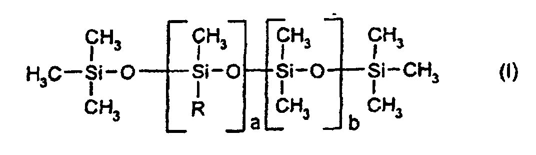 dans laquelle
R signifie un radical hydrocarboné le cas échéant ramifié comprenant 16 à 50 atomes de carbone,
a signifie une valeur entre 0,8 et 1,5,
b signifie une valeur de 3 à a.

2. Composés siloxane selon la revendication 1, **caractérisés en ce que** a présente une valeur de 1,0 à 1,3.

3. Composés siloxane selon la revendication 1 ou 2, **caractérisés en ce que** R est un radical hydrocarboné présentant un nombre moyen de 30 atomes de carbone.

4. Utilisation des composés siloxane de formule générale (I) 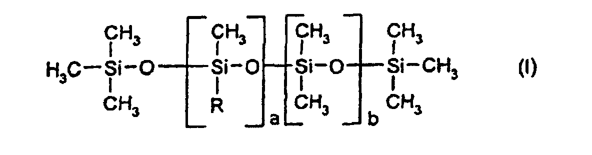 dans laquelle
R signifie un radical hydrocarboné le cas échéant ramifié comprenant 16 à 50 atomes de carbone,
a signifie une valeur entre 0,8 et 1,5,
b signifie une valeur de 3 à a
comme agent d'homogénéisation dans des agents de séparation avec un effet matifiant pour des moules pour la production de corps façonnés en matériaux synthétiques, en particulier des polyuréthanes.

5. Agents de séparation avec effet matifiant pour des moules pour la production de corps façonnés en matériaux synthétiques, en particulier des polyuréthanes, **caractérisés en ce qu'**ils contiennent comme agent d'homogénéisation des composés de formule générale (I).
